(19) **Europäisches Patentamt** / **European Patent Office** / **Office européen des brevets**

(11) **EP 2 558 881 B1**

(12) **FASCICULE DE BREVET EUROPEEN**

(45) Date de publication et mention de la délivrance du brevet:
**05.11.2014 Bulletin 2014/45**

(21) Numéro de dépôt: **11714763.7**

(22) Date de dépôt: **14.04.2011**

(51) Int Cl.:
*G01S 7/527* *(2006.01)*     *G01S 15/52* *(2006.01)*

(86) Numéro de dépôt international:
**PCT/EP2011/055902**

(87) Numéro de publication internationale:
**WO 2011/128402 (20.10.2011 Gazette 2011/42)**

(54) **TRAITEMENT ADAPTATIF DE FORMATION DE VOIES POUR SONAR ACTIF**

PFADFORMENDE ADAPTIVE VERARBEITUNG FÜR AKTIVES SONAR

PATH-FORMING ADAPTIVE PROCESSING FOR ACTIVE SONAR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **16.04.2010 FR 1001633**

(43) Date de publication de la demande:
**20.02.2013 Bulletin 2013/08**

(73) Titulaire: **Thales**
**92200 Neuilly-sur-Seine (FR)**

(72) Inventeurs:
- **DOISY, Yves**
  **F-06130 Grasse Plascassier (FR)**
- **DERUAZ-PEPIN, Laurent**
  **F-06370 Mouans Sartoux (FR)**

(74) Mandataire: **Collet, Alain et al**
**Marks & Clerk France**
**Conseils en Propriété Industrielle**
**Immeuble Visium**
**22, Avenue Aristide Briand**
**94117 Arcueil Cedex (FR)**

(56) Documents cités:
**FR-A1- 2 675 587     FR-A1- 2 828 936**
**FR-A1- 2 862 439**

- **DOISY Y ET AL: "Airborne Radar and shipborne sonar: Recent advances and compared solutions", RADAR CONFERENCE - SURVEILLANCE FOR A SAFER WORLD, 2009. RADAR. INTERNATIONAL, IEEE, PISCATAWAY, NJ, USA, 12 octobre 2009 (2009-10-12), pages 1-6, XP031653009, ISBN: 978-2-912328-55-7**

**Description**

La présente invention concerne le domaine général des antennes réseaux actives. Elle se rapporte aux procédés de traitement d'antenne adaptative pour les sonars actifs, principalement en mode doppler, permettant en particulier de réduire la gêne occasionnée par la réverbération du fond marin.

De manière générale, le traitement adaptatif d'antenne présente de nombreux avantages. La mise ne oeuvre d'un tel traitement dans un système de détection équipé d'une antenne réseau permet notamment au système de lutter efficacement contre le brouillage, de disposer d'un pouvoir séparateur angulaire amélioré, ou encore de bénéficier d'une réduction du niveau de bruit reçu, ce bruit pouvant par exemple correspondre à la réverbération sonore provenant du fond sous-marin.

De manière connue, un tel traitement peut être appliqué au signal reçu par une antenne multi-capteurs, soit directement sur le signal obtenu en sortie de capteur, soit au signal obtenu après formation de voies de réception, une voie de réception étant formée en regroupant plusieurs des capteurs constituant l'antenne sachant que tout ou partie des capteurs constituant l'antenne peuvent être utilisé pour former des voies.

Les différentes sorties exploitées par le traitement constituent ce qu'il est convenu d'appeler les "références" ou les "degrés de liberté" du traitement. Bien entendu, plus le nombre de degrés de liberté est important et plus le traitement adaptatif peut être performant vis-à-vis des nuisances dont on cherche à s'affranchir.

La mise en oeuvre d'un traitement adaptatif de formation de voies repose sur une étape fondamentale consistant à réaliser l'estimation de la matrice de covariance des signaux produits par les différentes références. De manière générale on doit considérer que la taille de la matrice de covariance qu'il est possible d'estimer de manière pertinente est fonction à la fois de la bande passante du signal exploité et de la durée de l'intervalle de temps pendant lequel la corrélation spatiale du champ de bruit mesuré par l'antenne ne varie pas significativement. Autrement dit, la taille de la matrice correspondant au nombre de références utilisées, on constate que le nombre de référence que l'on peut prendre utilement en compte est directement fonction de la bande passante du signal et de la durée de stationnarité du bruit capté par l'antenne.

Ainsi, dans le cas de la détection sous-marine, la stationnarité du champ de bruit mesuré par une antenne sonar est généralement de plusieurs secondes. Par ailleurs, les bandes passantes des signaux traités permettent d'effectuer des observations avec une cadence d'acquisition d'observations indépendantes de l'ordre du kilohertz. Par suite, il est possible, dans un tel contexte, de considérer des matrices de covariance comportant de l'ordre de 100 à 1000 éléments. Toutefois, dans certaines applications, en particulier en sonar actif en mode doppler (mode CW par exemple), où le traitement est effectué en sortie de filtre adapté, les bandes passantes disponibles sont de l'ordre du Hz à quelques dizaines de Hz, de sorte qu'il est seulement possible d'estimer des matrices ayant des dimensions de quelques unités. Il s'ensuit que le nombre de références, de degrés de liberté, doit être réduit et choisi en fonction des objectifs de réduction de bruit recherchés.

En ce qui concerne les systèmes sonar actifs, le traitement adaptatif sur capteurs permet théoriquement de disposer du nombre de degrés de liberté maximum. Cependant, la mise en oeuvre d'un tel traitement n'est généralement pas possible car elle conduit, du fait du nombre important de références considérées, à des durées d'estimation de la matrice de covariance prohibitives, incompatibles des durées d'observation imposées par le fonctionnement du sonar, particulièrement en mode doppler. C'est pourquoi on met en oeuvre différentes techniques connues pour diminuer le nombre de degré de liberté.

La technique la plus communément employée pour réduire le nombre de degrés de liberté consiste à former des voies de réception sur l'ensemble des capteurs de l'antenne, ces voies pointant dans la direction des sources de bruit à supprimer, et à effectuer le traitement adaptatif en sortie de ces voies. Cependant, cette technique connue sous la dénomination anglo-saxonne de "full array beam space adaptive beam forming" a pour inconvénient de nécessiter une sélection préalable des voies de référence pointant en directions des sources de bruit à supprimer, et de gérer cette sélection en fonction du scénario opérationnel.

Une autre technique connue, dénommée "traitement adaptatif en sortie de voies sur sous-antennes", ou "Subarray Adaptive Beamforming" selon la dénomination anglo-saxonne, consiste à grouper les capteurs de façon à diviser l'antenne en sous-antennes adjacentes, et à former des voies de réception conventionnelles pour chaque sous-antenne puis à recombiner ces voies de façon adaptative. Cette technique, quoique bien adaptée à la suppression de brouilleurs ponctuels, ne traite cependant pas le cas de brouillages consécutifs à des sources de bruit spatialement étendues, tel que le bruit constitué par la réverbération sur le fond ou le bruit propre du navire porteur par faible fonds, ces bruits ayant une distance de corrélation courte par rapport à la distance entre les centres de phase des sous-antennes.

Une variante de la technique de traitement adaptatif en sortie de voies sur sous-antennes, utilisant des sous-antennes parallèles identiques, est notamment décrite dans le brevet français N° 0111106 délivré à la déposante le 05/12/2003. Cette variante ne permet cependant pas de disposer d'un nombre de degrés de libertés suffisant pour supprimer efficacement les brouilleurs spatialement très étendus.

Un but de l'invention est de proposer une solution permettant de réaliser un traitement d'antenne adaptatif permettant de s'affranchir efficacement des perturbations occasionnées par des sources de bruit spatialement étendues comme en particulier le bruit réverbéré par le fond marin.

A cet effet l'invention a pour objet un procédé de formation de voies de réception adaptatives pour un système de détection comportant une antenne multi-capteurs, la formation de voies adaptatives permettant de supprimer un signal parasite ou un bruit, procédé qui comporte:

- une première étape de formation de N sous-antennes enchevêtrées, chaque sous-antenne n comportant un nombre de capteurs identiques, les centres de phase des sous-antennes présentant un décalage donné les uns par rapport aux autres;
- une deuxième étape de formation, pour chaque sous-antenne n, de M voies de réception primaires, à partir des capteurs formant la sous-antenne considérée;
- une troisième étape de formation de M voies de réception secondaires, chaque voie secondaire m étant formée à partir des voies primaires m correspondant, pour les N sous-antennes, à la même direction d'observation, cette étape est réalisée en mettant en oeuvre un traitement adaptatif des signaux produits par les voies de réception primaires.

Selon l'invention, les capteurs formant une même sous-antenne, sont en outre déterminés de façon à ce que les centres de phase de deux sous-antennes quelconques n et n' soient distants l'un de l'autre d'une distance inférieure à la distance de corrélation spatiale du bruit ou du signal parasite que l'on cherche à supprimer.

Dans une forme de mis en oeuvre adaptée à un système de détection fonctionnant en bande étroite, la troisième étape du procédé selon l'invention effectue les opérations suivantes:

- une première opération d'estimation, pour chaque voie primaire m, de la matrice de covariance $\tilde{\Gamma}(m)$ des signaux $V_n(m, t)$ (54) formés dans la direction m pour l'ensemble des N sous-antennes; la matrice de covariance estimée $\tilde{\Gamma}(m)$ étant ensuite inversée;
- une deuxième opération de détermination, pour chaque voie m, du vecteur de déphasage $\vec{d}(m)$ défini par la relation suivante:

$$[d(m)]_n = \exp(i2\pi \frac{f_0}{c} \vec{u}_m \vec{\delta}_n)$$

dans laquelle $f_0$ désigne la fréquence centrale du signal et $\vec{u}_m$ un vecteur unitaire dans la direction de pointage de la voie m;

- une troisième opération de formation proprement dite des M voies de réception secondaires adaptatives par détermination du signal Vs(m,t) correspondant à chacune des voies m, le signal Vs(m,t) étant défini par la relation:

$$Vs(m,t) = \frac{\left[\vec{d}(m)\right]^+ \cdot \hat{\Gamma}^{-1}(m,t)}{\left[\vec{d}(m)\right]^+ \cdot \hat{\Gamma}^{-1}(m,t) \cdot \vec{d}(m)} \cdot \vec{V}(m,t)$$

Dans une forme de mise en oeuvre adaptée à un système de détection fonctionnant en bande large, la troisième étape effectue une opération initiale de décomposition de la bande spectrale du signal reçu en sous-bandes spectrales k, de façon à ce que le signal correspondant à chaque sous-bande soit un signal en bande étroite; puis, pour chaque sous-bande spectrale k, les opérations suivantes:

- une première opération d'estimation, pour chaque voie secondaire m, de la matrice de covariance $\tilde{\Gamma}(m,t,k)$ des signaux $V_n(m,t,k)$ formés dans la direction m pour l'ensemble des N sous-antennes; la matrice de covariance estimée $\tilde{\Gamma}(m,t,k)$ étant ensuite inversée;
- une deuxième opération de détermination, pour chaque voie m, du vecteur de déphasage $\vec{d}(m,k)$ défini par la relation

# EP 2 558 881 B1

suivante:

$$[d(m,k)]_n = \exp\left(i2\pi \frac{f_k}{c} \vec{u}_m \vec{\delta}_n\right)$$

dans laquelle $f_k$ désigne la fréquence centrale de la sous-bande k et $\vec{u}_m$ un vecteur unitaire dans la direction de pointage de la voie m;

- une troisième opération de formation proprement dite, des M voies de réception secondaires adaptatives par détermination du signal Vs(m,t,k) correspondant à chacune des voies m, le signal Vs(m,t,k) étant défini par la relation:

$$Vs(m,t,k) = \frac{\left[\vec{d}(m,k)\right]^+ \cdot \hat{\Gamma}^{-1}(m,t,k)}{\left[\vec{d}(m,k)\right]^+ \cdot \hat{\Gamma}^{-1}(m,t,k) \cdot \vec{d}(m,k)} \cdot \vec{V}(m,t,k).$$

Les signaux Vs(m,t,k) obtenus pour chaque sous-bande spectrale sont ensuite combinés les uns aux autres par transformée de Fourier au cours d'une étape final, pour former le signal global Vs(m,t) correspondant à la voie m.
Selon une forme de mise en oeuvre préférée du procédé selon l'invention, l'estimation $\tilde{\Gamma}(m)$ de la matrice de covariance des signaux $V_n(m, t)$ est réalisée à partir de la relation suivante:

$$\hat{\Gamma}(m,t) = \sum_{t'=-T/2}^{T/2} \vec{V}(m,t+t') \cdot \left[\vec{V}(m,t+t')\right]^+$$

où $\vec{V}(m,t+t')$ représente le vecteur des signaux correspondant aux M voies primaires et $[\vec{V}(m, t+t')^+$ le vecteur transposé conjugué de ce vecteur.
Selon une forme de mise en oeuvre particulière, adaptée à un fonctionnement doppler du système de détection, le procédé selon l'invention comporte une étape complémentaire d'analyse Doppler du signal reçu, cette étape complémentaire pouvant être mise en oeuvre avant ou après la deuxième étape; les étapes suivant cette étape complémentaires étant mises en oeuvre en parallèle, sur chacune des voies doppler ainsi formées.
Selon une forme de mise en oeuvre particulière, l'analyse Doppler appliquée est une analyse par corrélation multi-copies qui consiste à corréler le signal reçu avec des copies du signal émis affectées de différents retards donnés.
Selon une forme de mise en oeuvre particulière, adaptée au cas où les sous-antennes formant l'antenne globale présentent une ambigüité spatiale, suivant une direction m', par rapport à la direction m considérée, la troisième opération effectuée par la troisième étape du procédé selon l'invention consiste à calculer, en plus du signal Vs(m,t), le signal Vs(m',t) défini par la relation suivante:

$$Vs(m',t) = \frac{\left[\vec{d}(m')\right]^+ \cdot \hat{\Gamma}^{-1}(m,t)}{\left[\vec{d}(m')\right]^+ \cdot \hat{\Gamma}^{-1}(m,t) \cdot \vec{d}(m')} \cdot \vec{V}(m,t)$$

où m' correspond à la direction ambigüe par rapport à la direction principale m.

4

L'invention a également pour objet une application du procédé selon l'invention à un système comportant une antenne linéaire formée de capteurs, distants les uns des autres d'une distance constante d, application dans laquelle la première étape procède à la formation de N sous-antennes linéaires enchevêtrées. Dans cette application, chaque sous-antenne est réalisée en associant les signaux reçus par des capteurs distants les uns des autres de N·d. Les sous-antennes sont, par ailleurs, décalées les unes des autres d'une distance d de sorte que les centres de phase des sous-antennes ainsi réalisées présentent un décalage d les uns par rapport aux autres.

L'invention a également pour objet une application du procédé selon l'invention à un système comportant une antenne plane formée de capteurs disposés en ligne et colonnes et distants les uns des autres d'une distance constante d, application dans laquelle la première étape procède à la formation de N sous-antennes planes enchevêtrées. Dans cette application, chaque sous-antenne est réalisée en associant les signaux reçus par des capteurs positionnés sur des lignes et de colonnes distantes les unes des autres de N·d. Les centres de phase des sous-antennes ainsi réalisées présentant en outre un décalage d en ligne ou en colonne les uns par rapport aux autres.

Les caractéristiques et avantages de l'invention seront mieux appréciés grâce à la description qui suit, description qui s'appuie sur les figures annexées qui représentent:

- la figure1, un synoptique présentant les différentes étapes du procédé selon l'invention;
- la figure 2, un arrangement des capteurs d'une antenne linéaire correspondant à un exemple de mise en oeuvre de la première étape du procédé selon l'invention;
- les figures 3 et 4, des arrangements des capteurs d'une antenne plane correspondant à un autre exemple de mise en oeuvre de la première étape du procédé selon l'invention;
- la figure 5, un synoptique détaillant les différentes opérations mises en oeuvre par la troisième étape du procédé selon l'invention, dans une forme particulière de mise en oeuvre.

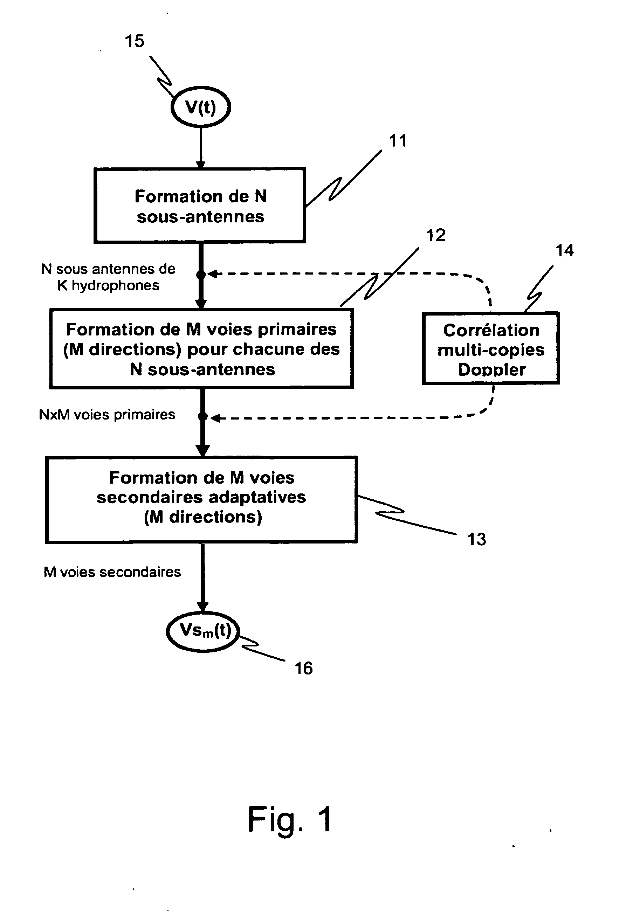

La figure 1 permet de présenter les différentes étapes du procédé selon l'invention. Celui-ci comporte principalement:

- une première étape 11 de formation de N sous-antennes;
- une deuxième étape 12 de formation, pour chaque sous-antenne, de M voies de réception primaires, à partir des capteurs formant la sous-antenne considérée;
- une troisième étape 13 de formation de M voies de réception secondaires, chaque voie secondaire m étant formée à partir des voies primaires m correspondant, pour les N sous-antennes, à la même direction d'observation. Cette étape est réalisée en mettant en oeuvre un traitement adaptatif détaillé plus loin.

La première étape du procédé selon l'invention a pour objet de constituer une première association des capteurs de l'antenne en groupes formant N sous-antennes de réception distinctes chaque groupe comportant par exemple un nombre identique K de capteurs. Les capteurs sont ici regroupés de façon à constituer N sous-ensemble, autrement dit N sous-antennes, présentant un chevauchement donné. Les N sous-antennes identiques constituent un sous-échantillonnage spatial du réseau de capteurs constituant l'antenne globale.

Selon une caractéristique essentielle de l'invention le regroupement des capteurs est réalisé de façon à former N sous-antennes imbriquées dont les N centres de phase sont distants les uns des autres de sorte que la distance maximale qui sépare les centres de phase de deux sous-antennes soit inférieure à la distance de corrélation spatiale du bruit ou du signal parasite que l'on cherche à supprimer. On rappelle à ce propos que la distance de corrélation spatiale est définie comme la distance maximale pouvant séparer deux capteurs donnés au delà de laquelle les signaux reçus par les capteurs ne sont plus corrélés. Dans le cas de deux sous-antennes cette distance de corrélation définit la distance maximale pouvant séparer les centres de phase de ces sous-antennes.

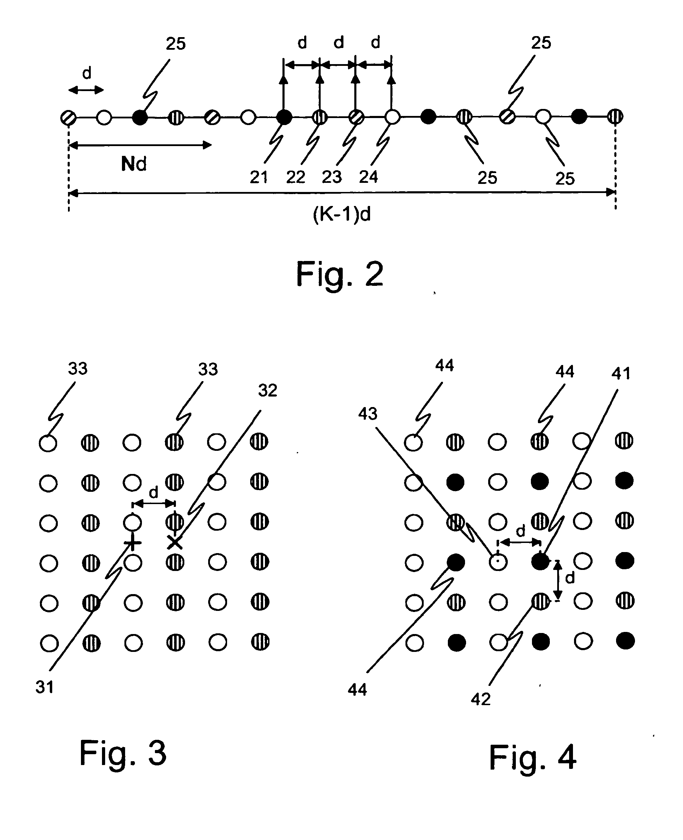

Selon l'invention, l'arrangement des capteurs de l'antenne a formation des différentes sous-antennes peut être réalisée de différentes façon pour peu que les sous-antennes ainsi constituées présentent des centres de phase situé à la distance désirée les uns par rapport aux autre. Les figures 2 à 4 présentent deux arrangements à titre d'exemples non limitatifs de mise en oeuvre.

La figure 2 présente un exemple de groupement des capteurs d'une antenne linéaire permettant de satisfaire la condition d'espacement des centres de phase énoncée précédemment. La figure 2 présente l'exemple simple d'une antenne comportant seize capteurs 25 régulièrement espacés les uns des autres d'une distance d qui constitue le pas de l'antenne globale. Ce pas est de manière connue défini de façon à éviter l'apparition de lobes de réseaux. Dans cette application, les capteurs constituant l'antenne sont groupés de façon à former N = 4 sous-antennes linéaires imbriquées comportant chacune quatre capteurs espacés les uns des autres d'un pas égal à N·d = 4d et présentant un décalage longitudinal de longueur d les unes par rapport aux autres. Par suite, avec un tel arrangement des capteurs, on définit quatre sous-antennes imbriquées présentant des centres de phase 21 à 24 espacés les uns des autres d'une distance d, de sorte que la distance maximale qui les sépare, égale ici à 3d, soit sensiblement inférieure à la distance de corrélation du bruit.

De la même façon, la figure 3 présente un exemple de groupement des capteurs d'une antenne plane permettant de satisfaire la condition d'espacement des centres de phase énoncée précédemment. La figure 3 présente l'exemple simple d'une antenne comportant 36 capteurs 33 régulièrement espacés les uns des autres d'une distance d, disposés aux croisements de lignes et de colonne régulièrement espacées les unes des autres d'une distance d sensiblement inférieure à la distance de corrélation du bruit considéré. De manière analogue à l'exemple de la figure 2, les capteurs 33 constituant l'antenne sont ici groupés de façon à former N = 2 sous-antennes planes imbriquées présentant un décalage longitudinal (monodimensionnel) de longueur d les unes par rapport aux autres. Par suite, avec un tel arrangement des capteurs, on définit deux sous-antennes imbriquées présentant des centres de phase 31 et 32 espacés l'un de l'autres d'une distance d qui remplit la condition de distance décrite précédemment.

De la même façon également, la figure 4 présente un exemple de groupement des capteurs 44 d'une antenne plane permettant de satisfaire la condition d'espacement des centres de phase énoncée précédemment. La figure 4 présente l'exemple simple d'une antenne comportant trente-six capteurs 44 régulièrement espacés les uns des autres d'une distance d, disposés aux croisements de lignes et de colonne régulièrement espacées les unes des autres d'une distance d sensiblement inférieure à la distance de corrélation du bruit considéré. Cependant, à la différence de l'exemple de la figure 3, les capteurs 44 constituant l'antenne sont ici groupés de façon à former N = 3 sous-antennes planes imbriquées présentant un décalage longitudinal (monodimensionnel) de longueur d les unes par rapport aux autres soit selon un des axes d'alignement des capteur soit selon l'autre axe d'alignement. On définit ainsi trois sous-antennes imbriquées présentant des centres de phase 41, 42 et 43 espacés l'un de l'autres d'une distance d qui remplit la condition de distance décrite précédemment.

La deuxième étape 12 du procédé a pour fonction principale d'utiliser un regroupement des capteurs en sous-antenne tel qu'il est réalisé lors de la première étape de façon à constituer, pour chaque sous-antenne, des voies de réception dites voies panoramiques primaires. Durant cette étape, la formation de voies panoramiques peut être réalisée de différentes façons connues. Elle peut en outre être réalisée dans le domaine temporel ou fréquentiel.

Ainsi, la formation de voies panoramiques primaires peut être réalisée de manière conventionnelle, les signaux reçus par les différents capteurs d'une même sous-antenne étant affectés d'un retard correspondant à la direction de pointage et additionnés, avec une pondération éventuelle.

La formation de voies panoramiques primaires peut encore être réalisée par synthèses de voies à directivité constante, selon un procédé, connu de l'état de l'art, qui consiste à diviser la bande passante totale du signal reçu en N sous-bandes étroites (ou canaux). Chaque canal n présente une fréquence centrale $f_n$ et une largeur typique c/(10L), L représentant la longueur des sous-antennes.

Pour chaque sous-bande ou canal, on définit alors des capteurs fictifs dont les positions sont elles-mêmes définies par interpolation spatiale des positions de capteurs réels formant l'antenne, de sorte que les positions des capteurs fictifs présentent des espacements homothétiques des espacements physiques séparant des capteurs réels sur la sous-antenne pour une fréquence de référence $f_r$ choisie parmi les fréquences centrales $f_n$. La fréquence $f_r$ correspond au canal pour lequel les capteurs fictifs coïncident avec les capteurs réels de la sous-antenne. Le rapport d'homothétie est ici égal au rapport de la fréquence du canal n à la fréquence de référence.

Ainsi, si $\vec{r_l}$ désigne la position physique du capteur I de la sous antenne considérée et $\vec{r_l}^{(n)}$ la position du capteur fictif pour le canal de fréquence $f_n$, pour tous les capteurs de la sous-antenne considérée, $\vec{r_l}$ et $\vec{r_l}^{(n)}$ vérifient la relation suivante:

$$f_n\left|\vec{r_k}^{(n)} - \vec{r_l}^{(n)}\right| = f_r\left|\vec{r_k} - \vec{r_l}\right| \qquad [1]$$

Les voies primaires sont formées dans chaque canal de manière conventionnelle, par retard plus sommation des signaux des capteurs fictifs correspondants. Les fonctions de directivité des voies formées aux fréquences $f_n$ à partir des capteurs fictifs des sous-antennes considérées ainsi reconstituées sont alors identiques, d'où l'appellation « formation de voie à directivité constante ». Par suite, le signal en sortie de voie primaire est obtenu en recombinant par transformée de Fourier les signaux des voies formées aux fréquences $f_n$.

Par ailleurs, la formation de voies panoramiques primaires peut encore être réalisée de manière adaptative, la réponse de chaque capteur étant alors optimisée selon la direction considérée. Cependant la formation adaptative peut s'avérer difficile à mettre en oeuvre du fait du nombre de capteurs que comporte encore chaque sous-antenne.

Quoi qu'il en soit et quelle que soit la méthode utilisée, on détermine ainsi pour chaque direction m de l'espace considérée le signal temporel complexe $V_n(m, t)$ de la voie de réception formée dans la direction m pour la sous-antenne n, n variant de 1 à N. $\vec{V}(m, t)$ désigne alors le vecteur colonne constitué des N composantes complexes $V_n(m, t)$.

La troisième étape 13 du procédé selon l'invention réalise la formation de voies adaptative proprement dite.

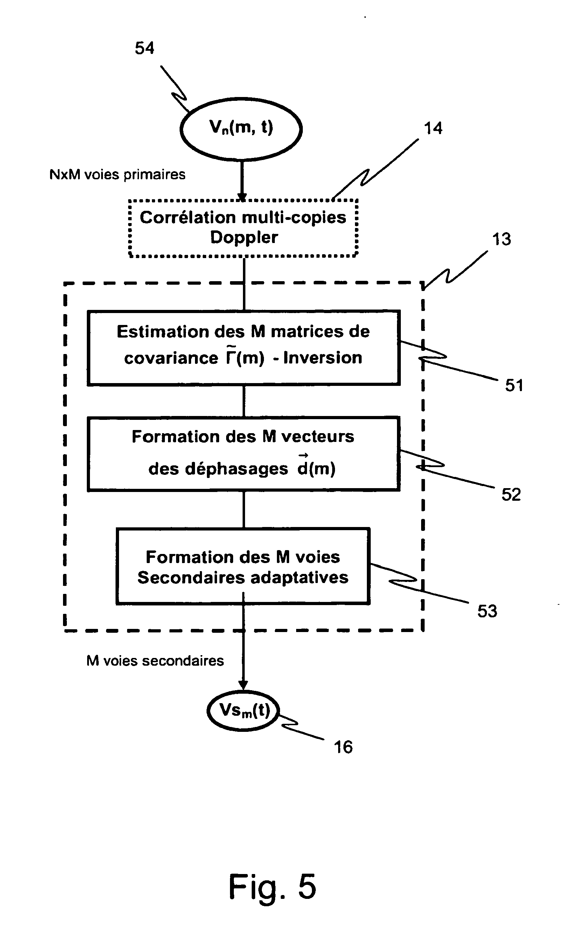

Celle-ci est facilitée par le fait que des voies de réception primaires ont déjà été formées à l'issue de la deuxième étape. Selon l'invention cette étape peut être réalisée en mettant en oeuvre tout procédé approprié connue de formation de voies de réception adaptatives à partir de voies de réceptions existantes. La suite du texte illustrée par la figure 5 propose à titre de forme de mise en oeuvre particulière un procédé permettant de réaliser cette troisième étape.

Comme l'illustre la figure 5, la troisième étape du procédé selon l'invention peut être réalisée en mettant en oeuvre les trois opérations suivantes:

- une première opération 51 d'estimation, pour chaque voie, chaque direction d'observation, m, de la matrice de covariance $\tilde{\Gamma}(m)$ des signaux $V_n(m, t)$ 54 formés dans la direction m pour l'ensemble des N sous-antennes. La matrice de covariance estimée $\tilde{\Gamma}(m)$ est ensuite inversée.
- une deuxième opération 52 de détermination, pour chaque voie m, du vecteur de déphasage $\vec{d}(m)$, ce vecteur $\vec{d}(m)$ étant le vecteur à appliquer au signal $\vec{V}(m, t)$ -correspondant à la voie-m considérée.
- une troisième opération 53 de formation proprement dite des M voies de réception secondaires adaptatives et de détermination du signal $V_m(t)$ correspondant à chacune des voies m.

Pour chaque direction de pointage m, l'opération 51 d'estimation de la matrice de covariance $\tilde{\Gamma}(m)$ est réalisée à partir des signaux des voies primaires formées dans la direction m pour chacune des N sous-antennes.

Cette matrice de covariance peut, selon l'invention, être estimée par toute méthode connue, la méthode directe décrite dans la demande de brevet déposé par la demanderesse par exemple. Cette méthode exploite sur une durée T donnée les signaux d'entrée, durée qui correspondant à la durée estimée a priori du signal de la cible observée. Cette durée peut être formée par un intervalle de temps continu ou par plusieurs intervalles de temps disjoints successifs. Par suite la matrice de covariance est obtenue par intégration du signal reçu pour chaque voie m sur T+1 échantillons temporels. Elle a pour expression:

$$\hat{\Gamma}(m,t) = \sum_{t'=-T/2}^{T/2} \vec{V}(m,t+t') \cdot \left[\vec{V}(m,t+t')\right]^{+} \qquad [2]$$

Où $\vec{V}(m, t + t')$ représente le vecteur des signaux correspondant aux M voies primaires et $[\vec{V}(m, t + t')]^{+}$ le vecteur transposé conjugué de ce vecteur.

Le paramètre T est ici déterminé en fonction du nombre de sous-antennes (i.e. de références) considérées, de façon à satisfaire la condition $BT \geq N$.

Il est à noter que ce moyennage sur une durée T a pour effet d'appliquer un filtre passe bas sur les variations de la matrice de covariance dans une bande passante de largeur 1/T. par suite, afin de ne pas perdre d'information, l'estimation de la matrice doit être renouvelée avec une cadence supérieure à 2/T.

La matrice inverse $\hat{\Gamma}^{-1}(m, t)$ est ensuite calculée

L'opération 52 de détermination, du vecteur de déphasage $\vec{d}(m)$ de l'antenne secondaire formée à partir des N sous-antennes consiste à calculer les composantes de ce vecteur à partir de l'expression suivante:

$$[d(m)]_n = \exp(i2\pi \frac{f_0}{c} \bar{u}_m \vec{\delta}_n) \qquad [3]$$

Dans laquelle $f_0$ désigne la fréquence centrale du signal pour le canal fréquentiel considéré et $\vec{u}_m$ un vecteur unitaire dans la direction de pointage de la voie m.

Par suite, l'opération 53 proprement dite de formation des voies secondaires consiste à calculer le signal Vs(m, t) correspondant à chaque voie m au moyen de la relation suivante:

$$Vs(m,t) = \frac{\left[\vec{d}(m)\right]^{+} \cdot \hat{\Gamma}^{-1}(m,t)}{\left[\vec{d}(m)\right]^{+} \cdot \hat{\Gamma}^{-1}(m,t) \cdot \vec{d}(m)} \cdot \vec{V}(m,t) \qquad [4]$$

Il est à noter qu'il peut s'avérer nécessaire de former plusieurs voies secondaires associées à un même jeu de N voies primaires V(m,t) pointant dans les directions caractérisées par m. C'est en particulier le cas si les sous antennes secondaires formées présentent une ambigüité spatiale qui peut être levée en jouant sur la géométrie des centres de phase des antennes secondaires. Une telle correspond par exemple au cas d'une antenne constituée de sous antennes linéaires parallèles dont les centres de phases sont situés perpendiculairement à l'axe des sous-antennes. L'opération 53 consiste alors à calculer, en plus du signal Vs(m, t), le signal Vs(m', t) défini par la relation suivante:

$$Vs(m',t) = \frac{\left[\vec{d}(m')\right]^{+} \cdot \hat{\Gamma}^{-1}(m,t)}{\left[\vec{d}(m')\right]^{+} \cdot \hat{\Gamma}^{-1}(m,t) \cdot \vec{d}(m')} \cdot \vec{V}(m,t) \qquad [5]$$

où m' correspond à la (/aux) direction(s) ambigües par rapport à m. Les signaux $\vec{V}$(m', t) correspondent alors à une domaine angulaire complémentaire de celui de $\vec{V}$(m, t) et sont traités et visualisés de façon analogue.

Les signaux $V_s$(m, t) et, le cas échéant, les signaux $V_s$(m', t) de sortie des voies secondaires adaptatives sont ensuite traités de manière connue de l'art antérieur : post-intégration(s) sur la durée de la cible, normalisation, détection...etc.

Ainsi, comme on peut le constater au travers de la relation précédente, l'estimation de la matrice de covariance $\tilde{\Gamma}$(m) associées aux N signaux formant la voie primaire correspondant à m permet de former une voie secondaire adaptative pour chaque direction d'observation m (ou plusieurs secondaire si les voies primaires sont ambiguës, c'est à dire si elles ont la même réponse pour différentes directions de l'espace).

Le procédé de formation de voies secondaires adaptatives décrit précédemment présente notamment l'avantage, à travers l'étape d'estimation et d'inversion de la matrice de covariance, de procéder à la construction d'un filtre spatial qui, appliqué aux signaux produits par les voies de réception primaires, permet avantageusement de construire des voies de réception secondaires prenant en compte l'environnement de façon optimale. Ainsi, en cas de brouillage fort, le filtre spatial construit prend implicitement en compte la réponse réelle de l'antenne dans la direction des brouilleurs et la compense, ce qui confère au procédé des caractéristiques d'antibrouillage très avantageuses.

Il est à noter que tel que le procédé selon l'invention est décrit dans le texte qui précède, l'étape 13 de formation de voie secondaire est décrite pour une configuration de fonctionnement en "bande étroite", c'est à dire une configuration dans laquelle la bande passante B traitée et les dimensions de l'antenne sont telles que pour deux sous-antennes n et n' quelconques parmi les N sous-antennes, la relation suivante est vérifiée on ait:

$$\frac{c}{B} \gg \left| \vec{\delta}_n - \vec{\delta}_{n'} \right| \qquad [6]$$

c représentent ici la vitesse de propagation du signal dans le milieu considéré. $\vec{\delta}_n$ et $\vec{\delta}_{n'}$ représentent quant à eux les vecteurs joignant le centre de phase de l'antenne secondaire formée au centre de phase des sous-antennes n et n' considérées.

Si cette condition n'est pas respectée, un procédé large bande, connu de l'art antérieur, doit être utilisé, en divisant la bande passante en canaux fréquentiels satisfaisant la condition [6], et en appliquant le traitement adaptatif décrit précédemment dans chaque canal fréquentiel k. Le signal de sortie Vs(m, t) de la voie secondaires adaptative m considérée est alors obtenu en recombinant par transformée de Fourier les signaux Vs(m,t,k) obtenus pour les différents canaux fréquentiels. Chaque signal Vs(m,t,k) est quant à lui défini par la relation suivante:

$$Vs(m,t,k) = \frac{\left[\vec{d}(m,k)\right]^+ \cdot \hat{\Gamma}^{-1}(m,t,k)}{\left[\vec{d}(m,k)\right]^+ \cdot \hat{\Gamma}^{-1}(m,t,k) \cdot \vec{d}(m,k)} \cdot \vec{V}(m,t,k) \qquad [7]$$

Où les grandeurs $\vec{d}$(m,k) et $\tilde{\Gamma}$(m, t, k) correspondent pour chaque canal k aux grandeurs définies par les relations [2] et [3].

Comme l'illustre la figure 1, le procédé de formation de voies selon l'invention s'intègre généralement en tête dans la chaine de traitement du signal du système qui le met en oeuvre. Cependant dans la mesure où la forme d'onde émise par le système est appropriée (émission CW ou plus généralement émission de codes à peignes de raies) le système applique généralement au signal reçu un traitement d'analyse Doppler. Ce traitement est alors intégré au procédé selon l'invention sous forme d'une étape 14 complémentaire durant laquelle l'analyse Doppler est réalisée. Le traitement appliqué peut par exemple consister, de manière connue non décrite ici, à corréler le signal d'entrée avec des copies Dopplérisées du signal émis, c'est-à-dire des répliques du signal émis affectées de décalages fréquentiels correspondant à différentes hypothèses d'observations d'objets en mouvement. L'intégration de cette étape d'analyse Doppler (i.e. de corrélation multi-copies) au procédé de formation de voies selon l'invention a pour conséquence que les étapes du traitement suivant cette étape 14 sont mises en oeuvre en parallèle, sur chacune des voies doppler ainsi formées. Le traitement décrit précédemment est alors applicable de manière identique sur chacune des voies Doppler, le signal Vs (m, t) représentant alors le signal correspondant à la voie secondaire adaptative m pour la voie doppler considérée.

Selon l'invention, l'étape complémentaire 14 d'analyse Doppler peut être exécutée, comme l'illustre la figure 1, avant ou après l'étape 12 de formation des voies de réception primaires.

## Revendications

1.  Procédé de formation de voies de réception adaptatives pour un système de détection comportant une antenne multi-capteurs, la formation de voies adaptatives permettant de supprimer un signal parasite ou un bruit, **caractérisé en ce qu'**il comporte:

    - une première étape (11) de formation de N sous-antennes enchevêtrées, chaque sous-antenne n comportant un nombre de capteurs identiques, les centres de phase des sous-antennes présentant un décalage donné les uns par rapport aux autres;
    - une deuxième étape (12) de formation, pour chaque sous-antenne n, de M voies de réception primaires, à partir des capteurs formant la sous-antenne considérée;
    - une troisième étape (13) de formation de M voies de réception secondaires, chaque voie secondaire m étant formée à partir des voies primaires m correspondant, pour les N sous-antennes, à la même direction d'observation, cette étape est réalisée en mettant en oeuvre un traitement adaptatif des signaux produits par les voies de réception primaires;
    les capteurs formant une même sous-antenne étant déterminés de façon à ce que les centres de phase de deux sous-antennes quelconques n et n' sont distants l'un de l'autre d'une distance inférieure à la distance de corrélation spatiale du bruit ou du signal parasite que l'on cherche à supprimer.

2.  Procédé selon la revendication 1, **caractérisé en ce que**, le fonctionnement du système de détection étant un fonctionnement en bande étroite, la troisième étape (13) effectue les opérations suivantes:

    - une première opération (51) d'estimation, pour chaque voie primaire m, de la matrice de covariance $\tilde{\Gamma}$(m) des signaux $V_n$(m, t) (54) formés dans la direction m pour l'ensemble des N sous-antennes; la matrice de covariance estimée $\tilde{\Gamma}$(m) étant ensuite inversée;
    - une deuxième opération (52) de détermination, pour chaque voie m, du vecteur de déphasage $\vec{d}$(m) défini par la relation suivante:

$$[d(m)]_n = \exp(i2\pi\frac{f_0}{c}\vec{u}_m\vec{\delta}_n)$$

dans laquelle $f_0$ désigne la fréquence centrale du signal et $\vec{u}_m$ un vecteur unitaire dans la direction de pointage de la voie m;

- une troisième opération (53) de formation proprement dite des M voies de réception secondaires adaptatives par détermination du signal Vs(m,t) correspondant à chacune des voies m, le signal Vs(m,t) étant défini par la relation:

$$Vs(m,t) = \frac{\left[\vec{d}(m)\right]^+ \cdot \hat{\Gamma}^{-1}(m,t)}{\left[\vec{d}(m)\right]^+ \cdot \hat{\Gamma}^{-1}(m,t)\cdot \vec{d}(m)} \cdot \vec{V}(m,t)$$

**3.** Procédé selon la revendication 1, **caractérisé en ce que**, le fonctionnement du système de détection étant un fonctionnement en bande large, la troisième étape (13) met en oeuvre une opération initiale de décomposition de la bande spectrale du signal reçu en sous-bandes spectrales k de façon à ce que le signal correspondant à chaque sous-bande soit un signal en bande étroite; puis, pour chaque sous-bande spectrale, les opérations suivantes:

- une première opération (51) d'estimation, pour chaque voie secondaire m, de la matrice de covariance $\tilde{\Gamma}(m,t,k)$ des signaux $V_n(m,t,k)$ (54) formés dans la direction m pour l'ensemble des N sous-antennes; la matrice de covariance estimée $\tilde{\Gamma}(m,t,k)$ étant ensuite inversée;
- une deuxième opération (52) de détermination, pour chaque voie m, du vecteur de déphasage $\vec{d}(m,k)$ défini par la relation suivante:

$$[d(m,k)]_n = \exp(i2\pi\frac{f_k}{c}\vec{u}_m\vec{\delta}_n)$$

dans laquelle $f_k$ désigne la fréquence centrale de la sous-bande k et $\vec{u}_m$ un vecteur unitaire dans la direction de pointage de la voie m;

- une troisième opération (53) de formation proprement dite, des M voies de réception secondaires adaptatives par détermination du signal Vs(m,t,k) correspondant à chacune des voies m, le signal Vs(m,t,k) étant défini par la relation:

$$Vs(m,t,k) = \frac{\left[\vec{d}(m,k)\right]^+ \cdot \hat{\Gamma}^{-1}(m,t,k)}{\left[\vec{d}(m,k)\right]^+ \cdot \hat{\Gamma}^{-1}(m,t,k)\cdot \vec{d}(m,k)} \cdot \vec{V}(m,t,k) ;$$

les signaux Vs(m,t,k) obtenus pour chaque sous-bande spectrale étant combinés les uns aux autres par transformée de Fourier au cours d'une étape finale, pour former le signal global Vs(m,t) (16) correspondant à la voie m.

**4.** Procédé selon l'une des revendications 2 ou 3, **caractérisé en ce que** l'estimation $\tilde{\Gamma}(m)$ de la matrice de covariance

des signaux $V_n(m, t)$ est réalisée à partir de la relation suivante:

$$\hat{\Gamma}(m,t) = \sum_{t'=-T/2}^{T/2} \vec{V}(m,t+t') \cdot \left[\vec{V}(m,t+t')\right]^+$$

où $\vec{V}(m, t + t')$ représente le vecteur des signaux correspondant aux M voies primaires et $[\vec{V}(m, t + t')]^+$ le vecteur transposé conjugué de ce vecteur.

5. Procédé selon l'une quelconque des revendications précédentes, **caractérisé en ce qu'**il comporte une étape complémentaire (14) d'analyse Doppler du signal reçu, cette étape complémentaire pouvant être mise en oeuvre avant ou après la deuxième étape du procédé; les étapes du procédé suivant cette étape complémentaires (14) étant mises en oeuvre en parallèle, sur chacune des voies doppler ainsi formées.

6. Procédé selon la revendication 5, **caractérisé en ce que** l'analyse Doppler appliquée est une analyse par corrélation multi-copies qui consiste à corréler le signal reçu avec des copies du signal émis affectées de différents retards donnés.

7. Procédé selon l'une quelconque des revendications précédentes, **caractérisé en ce que** chacune des sous-antennes présentant une ambiguïté spatiale, suivant une direction m', par rapport à la direction m considérée, l'opération 53 consiste alors à calculer, en plus du signal Vs(m,t), le signal Vs(m',t) défini par la relation suivante:

$$Vs(m',t) = \frac{\left[\vec{d}(m')\right]^+ \cdot \hat{\Gamma}^{-1}(m,t)}{\left[\vec{d}(m')\right]^+ \cdot \hat{\Gamma}^{-1}(m,t) \cdot \vec{d}(m')} \cdot \vec{V}(m,t)$$

où m' correspond à la direction ambigüe par rapport à la direction principale m.

8. Application du procédé selon l'une quelconque des revendications précédentes à un système comportant une antenne linéaire formée de capteurs distants les uns des autres d'une distance constante d; l'étape (11) de formation de N sous-antennes linéaires enchevêtrées étant réalisée en associant les signaux reçus par des capteurs distants les uns des autres de N·d, les sous-antennes étant décalées les unes des autres d'une distance d; les centres de phase des sous-antennes ainsi réalisées présentant un décalage d les uns par rapport aux autres.

9. Application du procédé selon l'une quelconque des revendications 1 à7 à un système comportant une antenne plane formée de capteurs disposés en ligne et colonnes et distants les uns des autres d'une distance constante d; l'étape (11) de formation de N sous-antennes planes enchevêtrées étant réalisée en associant les signaux reçus par des capteurs positionnés sur des lignes et de colonnes distantes les unes des autres de N·d, les centres de phase des sous-antennes ainsi réalisées présentant un décalage d en ligne ou en colonne les uns par rapport aux autres.

## Patentansprüche

1. Verfahren zum Formen adaptiver Empfangspfade für ein Detektionssystem, das eine Multisensorantenne aufweist, wobei die Formung adaptiver Pfade erlaubt, ein Störsignal oder ein Geräusch zu unterdrücken, **dadurch gekennzeichnet, dass** es aufweist:

einen ersten Formungsschritt (11) von N verblockten Unterantennen, wobei jede Unterantenne n eine Anzahl identischer Sensoren aufweist, wobei die Phasenzentren der Unterantennen im Verhältnis zueinander einen bestimmten Versatz aufweisen,
einen zweiten Formungsschritt (12) für jede Unterantenne n von M primären Empfangspfaden ausgehend von den Sensoren, die die entsprechende Unterantenne formen,
einen dritten Formungsschritt (13) von M sekundären Empfangspfaden, wobei jeder sekundäre Pfad m ausgehend von den primären Pfaden m geformt wird, der für die N Unterantennen derselben Beobachtungsrichtung entspricht, wobei dieser Schritt durch Umsetzung einer adaptiven Verarbeitung der von den primären Empfangspfaden erzeugten Signale erfolgt,
wobei die Sensoren, die eine selbe Unterantenne formen, derart bestimmt werden, dass die Phasenzentren von zwei beliebigen Unterantennen n und n' in einem Abstand voneinander beabstandet sind, der kleiner ist als der räumliche Korrelationsabstand des Geräuschs oder des Störsignals, das unterdrückt werden soll.

2. Verfahren nach Anspruch 1, **dadurch gekennzeichnet, dass** die Funktionsweise des Detektionssystems eine Schmalband-Funktionsweise ist, wobei der dritte Schritt (13) die folgenden Operationen durchführt:

eine erste Schätzungsoperation (51) für jeden primären Pfad m der Kovarianzmatrix $\tilde{\Gamma}(m)$ der in die Richtung m geformten Signale $V_n(m, t)$ (54) für die Gesamtheit der Unterantennen n, wobei die geschätzte Kovarianzmatrix $\tilde{\Gamma}(m)$ danach umgekehrt wird,
eine zweite Bestimmungsoperation (52) für jeden Pfad m des durch die folgende Gleichung definierten Phasenverschiebungsvektors $\vec{d}(m)$ :

$$[d(m)]_n = \exp(i2\pi \frac{f_0}{c} \vec{u}_m \vec{\delta}_n)$$

wobei $f_0$ die zentrale Frequenz des Signals bezeichnet und $\vec{u}_m$ einen Einheitsvektor in Zielrichtung des Pfads m,
eine dritte eigentliche Formungsoperation (53) der M adaptiven sekundären Empfangspfade durch Bestimmen des Signals Vs(m,t), das jedem der Pfade m entspricht, wobei das Signal Vs(m,t) durch die Gleichung bestimmt wird:

$$Vs(m,t) = \frac{\left[\vec{d}(m)\right]^+ \cdot \hat{\Gamma}^{-1}(m,t)}{\left[\vec{d}(m)\right]^+ \cdot \hat{\Gamma}^{-1}(m,t) \cdot \vec{d}(m)} \cdot \vec{V}(m,t)$$

3. Verfahren nach Anspruch 1, **dadurch gekennzeichnet, dass**, wobei die Funktionsweise des Detektionssystems eine Breitband-Funktionsweise ist, der dritte Schritt (13) eine anfängliche Zerlegungsoperation des Spektralbands des empfangenen Signals in Spektralunterbänder k derart umsetzt, dass das Signal, das jedem Unterband entspricht, ein Schmalbandsignal ist; dann, für jedes Spektralunterband, die folgenden Operationen:

eine erste Schätzungsoperation (51) für jeden sekundären Pfad m der Kovarianzmatrix $\tilde{\Gamma}(m, t, k)$ der in Richtung m geformten Signale $V_n(m, t, k)$ (54) für die Gesamtheit der N Unterantennen, wobei die geschätzte Kovarianzmatrix $\tilde{\Gamma}(m, t, k)$ danach umgekehrt wird,
eine zweite Bestimmungsoperation (52) für jeden Pfad m des durch die folgende Gleichung definierten Phasenverschiebungsvektors $\vec{d}(m,k)$ :

$$[d(m,k)]_n = \exp(i2\pi \frac{f_k}{c} \vec{u}_m \vec{\delta}_n)$$

wobei $f_k$ die zentrale Frequenz des Unterbands k bezeichnet und $\vec{u}_m$ einen Einheitsvektor in Zielrichtung des Pfads m,
eine dritte eigentliche Formungsoperation (53) der M adaptiven sekundären Empfangspfade durch Bestimmen des Signals Vs(m,t,k), das jedem der Pfade m entspricht, wobei das Signal Vs(m,t,k) durch die Gleichung bestimmt wird:

$$Vs(m,t,k) = \frac{\left[\vec{d}(m,k)\right]^{+} \cdot \hat{\Gamma}^{-1}(m,t,k)}{\left[\vec{d}(m,k)\right]^{+} \cdot \hat{\Gamma}^{-1}(m,t,k) \cdot \vec{d}(m,k)} \cdot \vec{V}(m,t,k) \; ;$$

wobei die für jedes Spektralunterband erhaltenen Signale Vs(m,t,k) bei einem Endschritt durch Fourier-Transformation miteinander kombiniert werden, um das globale Signal Vs(m,t) (16) zu formen, das dem Pfad m entspricht.

4. Verfahren nach einem der Ansprüche 2 oder 3, **dadurch gekennzeichnet, dass** die Schätzung $\tilde{\Gamma}(m)$ der Kovarianzmatrix der Signale $V_n(m, t)$ mit der folgenden Gleichung durchgeführt wird:

$$\hat{\Gamma}(m,t) = \sum_{t'=-T/2}^{T/2} \vec{V}(m,t+t') \cdot \left[\vec{V}(m,t+t')\right]^{+}$$

wobei V(m,t+t') den Vektor der Signale darstellt, die den M primären Pfaden entsprechen, und $[\vec{V}(m, t + t')]^{+}$ den konjugierten transponierten Vektor dieses Vektors.

5. Verfahren nach einem der vorangehenden Ansprüche, **dadurch gekennzeichnet, dass** es einen komplementären Doppleranalyseschritt (14) des empfangenen Signals aufweist, wobei dieser komplementäre Schritt vor oder nach dem zweiten Schritt des Verfahrens umsetzbar ist, wobei die Verfahrensschritte nach diesem komplementären Schritt (14) auf jedem der derart geformten Dopplerpfade parallel umgesetzt werden.

6. Verfahren nach Anspruch 5, **dadurch gekennzeichnet, dass** die angewendete Doppleranalyse eine Analyse durch Multikopiekorrelation ist, die darin besteht, das empfangene Signal mit Kopien des gesendeten Signals zu korrelieren, denen verschiedene bestimmte Verzögerungen zugeordnet sind.

7. Verfahren nach einem der vorangehenden Ansprüche, **dadurch gekennzeichnet, dass** gemäß einer Richtung m' im Verhältnis zur betrachteten Richtung m jede der Unterantennen eine räumliche Mehrdeutigkeit aufweist, wobei die Operation (53) dann darin besteht, zusätzlich zum Signal Vs(m,t) das Signal Vs(m',t) zu berechnen, das durch die folgende Gleichung definiert ist:

$$Vs(m',t) = \frac{\left[\vec{d}(m')\right]^{+} \cdot \hat{\Gamma}^{-1}(m,t)}{\left[\vec{d}(m')\right]^{+} \cdot \hat{\Gamma}^{-1}(m,t) \cdot \vec{d}(m')} \cdot \vec{V}(m,t)$$

wobei m' der im Verhältnis zur Hauptrichtung m mehrdeutigen Richtung entspricht.

8. Anwendung des Verfahrens nach einem der vorangehenden Ansprüche auf ein System, das eine lineare Antenne aufweist, die von voneinander in einem konstanten Abstand d beabstandeten Sensoren geformt wird, wobei der Formungsschritt (11) von N verblockten linearen Unterantennen durch Zuordnung der von in N·d voneinander beabstandeten Sensoren empfangenen Signale durchgeführt wird, wobei die Unterantennen in einem Abstand d zueinander versetzt sind, wobei die Phasenzentren der derart erzeugten Unterantennen zueinander einen Versatz d aufweisen.

9. Anwendung des Verfahrens nach einem der Ansprüche 1 bis 7 auf ein System, das eine plane Antenne aufweist, die von in Reihe und Kolonne angeordneten und in einem konstanten Abstand d voneinander beabstandeten Sensoren geformt wird, wobei der Formungsschritt (11) von N verblockten planen Unterantennen durch Zuordnung von auf Reihen und Kolonnen positionierten in N·d voneinander beabstandeten Sensoren empfangenen Signale durchgeführt wird, wobei die Phasenzentren der derart erzeugten Unterantennen in Reihe oder in Kolonne zueinander einen Versatz d aufweisen.

**Claims**

1. A method enabling the formation of adaptive reception paths for a detection system comprising an antenna including a plurality of sensors, the formation of adaptive reception paths providing the ability to suppress an unwanted spurious signal or noise, **characterised in that** it includes :

   a first step (11) of formation of N intertwined sub-antennas, each sub-antenna n including a number of identical sensors, the phase centres of the sub-antennas presenting a given offset in relation to each other;
   a second step (12) of formation, for each sub-antenna n, of M primary reception paths, based on the sensors forming the sub-antenna considered;
   a third step (13) of formation of M secondary reception paths, each secondary path m being formed based on the primary reception paths m corresponding, for the N sub-antennas, to the same direction of observation, this step is carried out by implementing an adaptive processing of the signals produced by the primary reception paths ;
   the sensors that form the same sub-antenna being determined in a manner such that the phase centres of any two sub-antennas n and n' are spaced apart from each other by a distance that is less than the spatial correlation distance of the noise or unwanted spurious signal that it is desired to remove.

2. A method according to claim 1, **characterised in that**, the operation of the detection system being a narrow band operation, the third step (13) carries out the following operations :

   a first operation (51) of estimation, for each primary path m, of the covariance matrix $\tilde{\Gamma}(m)$ of the signals $V_n(m, t)$ (54) formed in the direction m for all of the N sub-antennas ; the estimated covariance matrix $\tilde{\Gamma}(m)$ being subsequently inverted ;
   a second operation (52) of determination, for each path m, of the phase difference vector $\vec{d}(m)$ defined by the following relationship :

   $$[d(m)]_n = \exp(i2\pi \frac{f_0}{c} \vec{u}_m \vec{\delta}_n)$$

   in which $f_0$ denotes the centre frequency of the signal and $\vec{u}_m$ is a unit vector in the pointing direction of the path m,
   a third operation (53) of formation strictly speaking, of the M adaptive secondary reception paths by determination of the signal Vs(m, t) corresponding to each of the paths m, the signal Vs(m, t) being defined by the relationship :

   $$Vs(m, t) = \frac{\left[\vec{d}(m)\right]^+ \cdot \hat{\Gamma}^{-1}(m, t)}{\left[\vec{d}(m)\right]^+ \cdot \hat{\Gamma}^{-1}(m, t) \cdot \vec{d}(m)} \cdot \vec{V}(m, t)$$

3. A method according to claim 1, **characterised in that**, the operation of the detection system being a narrow band operation, the third step (13) implements an initial operation of decomposition of the spectral band of the received signal into spectral sub-bands k in a manner such that the signal corresponding to each sub-band is a narrow band signal; then carrying out, for each spectral sub-band, the following operations :

a first operation (51) of estimation for each secondary path m, of the covariance matrix $\tilde{\Gamma}(m,t,k)$ of the signals $V_n(m, t, k)$ (54) formed in the direction m for all of the N sub-antennas ; the estimated covariance matrix $\tilde{\Gamma}(m, t, k)$ being subsequently inverted,

a second operation (52) of determination, for each path m, of the phase difference vector $\vec{d}(m, k)$ defined by the following relationship :

$$[d(m,k)]_n = \exp(i2\pi \frac{f_k}{c} \vec{u}_m \vec{\delta}_n )$$

in which $f_k$ denotes the centre frequency of the sub-band k and $\vec{u}_m$ is a unit vector in the pointing direction of the path m,

a third operation (53) of formation strictly speaking, of the M adaptive secondary reception paths by determination of the signal Vs(m,t,k) corresponding to each of the paths m, the signal Vs(m,t,k) being defined by the relationship :

$$Vs(m,t,k) = \frac{\left[\vec{d}(m,k)\right]^+ \cdot \hat{\Gamma}^{-1}(m,t,k)}{\left[\vec{d}(m,k)\right]^+ \cdot \hat{\Gamma}^{-1}(m,t,k) \cdot \vec{d}(m,k)} \cdot \vec{V}(m,t,k) \; ;$$

the signals Vs(m,t,k) obtained for each spectral sub-band being combined with each other by means of Fourier transform during a final step, so as to form the overall signal Vs(m,t) (16) corresponding to the path m.

4. A method according to one of claims 2 or 3, **characterised in that** the estimation $\tilde{\Gamma}(m)$ of the covariance matrix of the signals $V_n(m, t)$ is performed based on the following relationship:

$$\hat{\Gamma}(m,t) = \sum_{t'=-T/2}^{T/2} \vec{V}(m,t+t') \cdot \left[\vec{V}(m,t+t')\right]^+$$

where V(m, t + t') represents the vector of the signals corresponding to the M primary paths and $[\vec{V}(m, t + t')]^+$ represents the conjugate transpose vector of this vector.

5. A method according to any one of the preceding claims, **characterised in that** it comprises a supplementary step (14) of performing a Doppler analysis of the signal received, it being possible for this additional step to be implemented before or after the second step of the method; the steps in the method subsequent to this supplementary step (14) being implemented in parallel, on each of the Doppler paths thus formed.

6. A method according to claim 5, **characterised in that** the Doppler analysis applied is an analysis by multi-copy correlation that consists of correlating the received signal with copies of the transmitted signal assigned different given delays.

7. A method according to any one of the preceding claims, **characterised in that** with each of the sub-antennas having a spatial ambiguity, along a direction m', relative to the direction m considered, the operation (53) then consists of calculating, in addition to the signal Vs(m, t), the signal Vs(m', t) defined by the following relationship :

$$Vs(m',t) = \frac{\left[\vec{d}(m')\right]^{+} \cdot \hat{\Gamma}^{-1}(m,t)}{\left[\vec{d}(m')\right]^{+} \cdot \hat{\Gamma}^{-1}(m,t) \cdot \vec{d}(m')} \cdot \vec{V}(m,t)$$

where m' corresponds to the ambiguous direction relative to the main direction m.

8. Application of the method according to any one of the preceding claims to a system comprising a linear antenna formed of sensors that are spaced apart from each other by a constant distance d; the step (11) of formation of N intertwined linear sub-antennas being carried out by combining the signals received by the sensors spaced apart from each other by a distance of N d, the sub-antennas being offset from each other by a distance d; with the phase centres of the sub-antennas thus produced having an offset d relative to each other.

9. Application of the method according to any one of claims 1 to 7, to a system comprising a planar antenna formed of sensors arranged in lines and columns and spaced apart from each other by a constant distance d; the step (11) of formation of N intertwined planar sub-antennas being carried out by combining the signals received by the sensors positioned on the lines and in columns spaced apart from each other by a distance of N d, with the phase centres of the sub-antennas thus produced having a line or column offset d relative to each other.

15

$V(t)$

11

Formation de N
sous-antennes

12

14

N sous antennes de
K hydrophones

Formation de M voies primaires
(M directions) pour chacune des
N sous-antennes

Corrélation
multi-copies
Doppler

NxM voies primaires

Formation de M voies
secondaires adaptatives
(M directions)

13

M voies secondaires

$Vs_m(t)$

16

# Fig. 1

Fig. 2

Fig. 3

Fig. 4

54

$V_n(m, t)$

NxM voies primaires

14

Corrélation multi-copies
Doppler

13

Estimation des M matrices de
covariance $\tilde{\Gamma}(m)$ - Inversion

51

Formation des M vecteurs
des déphasages $\vec{d}(m)$

52

Formation des M voies
Secondaires adaptatives

53

M voies secondaires

$Vs_m(t)$

16

Fig. 5

**EP 2 558 881 B1**

**Documents brevets cités dans la description**

- FR 0111106